# EUROPÄISCHE PATENTANMELDUNG

(11) **EP 2 884 234 A1**
(43) Veröffentlichungstag der Anmeldung: **17.06.2015**
(21) Anmeldenummer: 14197692.8
(22) Anmeldetag: 12.12.2014
(51) Int. Cl.: G01D 5/20

(54) **Induktiver Sensor mit einem beliebig langen Messweg**

(30) Priorität: 13.12.2013 DE 102013225897
(71) Anmelder: Continental Teves AG & Co. oHG, 60488 Frankfurt (DE)
(72) Erfinder: Horn, Rainer, 65817 Eppstein (DE); Schirling, Andreas, 64285 Darmstadt (DE)

(57) **Zusammenfassung**

Sensor (2) zum Erfassen der Position eines bewegenden Elements, aufweisend:
- eine Erregerspule (20, 120, 220), welche mit einer Wechselspannung (U∼) versorgt wird, um ein zur Wechselspannung (U∼) korrespondierendes Erregerfeld zu erzeugen,
- mindestens zwei Empfangsspulen (40a, 40b, 140a, 140b, 240a, 240b), die mit der Erregerspule (20, 120, 220) derart gekoppelt sind, so dass das Erregerfeld in den Empfangsspulen (40a, 40b, 140a, 140b, 240a, 240b) jeweils eine Spannung induziert, und
- eine Positionsgebereinheit, das mit dem bewegenden Element verbunden ist und mittels dessen die Spannung der Empfangsspulen (40a, 40b, 140a, 140b, 240a, 240b) beeinflussbar ist,

dadurch gekennzeichnet, dass die Positionsgebereinheit mehrere entlang Positionsgeberelemente (LC1-LCn) aufweist, welche den Messpfad definieren.

## Beschreibung

Die Erfindung betrifft einen Sensor zum Erfassen der Position eines bewegenden Elements gemäß dem Oberbegriff des Anspruchs 1.

Aus der EP 1 828 722 B1 ist ein induktiver Positionsdetektor mit einer ersten induktiven Einrichtung und einer zweiten induktiven Einrichtung bekannt, wobei die erste induktive Einrichtung einen passiven Resonanzkreis umfasst und die zweite induktive Einrichtung die Messstrecke definiert und mindestens zwei Empfangswindungen umfasst. Die zweite induktive Einrichtung ist so konfiguriert, dass sie im Gebrauch einen Wechselstrom in dem passiven Resonanzkreis induziert, sodass der in dem passiven Resonanzkreis induzierte Wechselstrom infolge der gegenseitigen Induktivität zwischen den Empfangswindungen und dem passiven Resonanzkreis ein Wechselsignal in jeder Empfangswindung induziert, wobei diese Signale bezeichnend sind für die Position der ersten induktiven Einrichtung auf der Messstrecke.

Ausgehend davon lag der Erfindung die Aufgabe zugrunde einen induktiven Positionssensor aufzuzeigen, mittels dessen der Messweg oder die Messstrecke variabel auslegbar ist und die Position eines bewegenden Elements entlang des Messweges erfasst werden kann.

Die Aufgabe wird durch die Merkmale der unabhängigen Ansprüche gelöst. Bevorzugte Ausführungsformen sind Gegenstand der abhängigen Ansprüche.

Die Erfindung basiert auf den Grundgedanken, die Positionsgebereinheit mit mehreren einzelnen bzw. voneinander unterscheidbaren Positionsgeberelementen auszustatten, über die die Verschiebung der Positionsgebereinheit zumindest relativ erfasst werden kann. Dies kann entweder durch eine eindeutige Identifizierung des Positionsgeberelements oder durch Zählen der Anzahl der über die Empfangsspule verfahrenen Positionsgeberelemente erfolgen. Die Anordnung der Positionsgeberelemente definiert dabei den Messweg bzw. den Messpfad. Dies ermöglicht die Gestaltung unterschiedlich geformter Messpfade, die variabel an die jeweiligen anderen Anwendungsfälle angepasst werden können. Vorteilhaft ist es zwei oder mehr Empfangsspulen zu verwenden. In der nachfolgenden Beschreibung wird daher auf mehrere Empfangsspulen Bezug genommen. Nachfolgende Ausführungsformen können im Prinzip auch mit einer Empfangsspule ausgeführt werden.

Die Positionsgebereinheit ist mit dem bewegenden Element verbunden und gibt die Bewegung des sich bewegenden Elements wieder. Durch das Erfassen der absoluten Position oder der relativen Bewegung des sich bewegenden Elements zu den Empfangsspulen kann die Position des rotierenden Elements entweder relativ zu den Empfangsspulen oder absolut in Bezug auf einen Bezugspunkt erfasst werden. Die Positionsgebereinheit ist ein von der Erregerspule und den Empfangsspulen separates Teil, das bspw. parallel benachbart zu den Spulen angeordnet ist.

Das Positionsgeberelement ist ein elektronisches Bauteil, was die Induktivität der Empfangsspulen beeinflusst und damit die Ausgangsspannung der Empfangsspulen verändert, wenn es dazu in Wirkungsreichweite gebracht wird. Beispielsweise kann dies in einer sehr einfacher Ausführung ein Stromleiter sein.

Eine vorteilhafte Ausführungsform des erfindungsgemäßen Sensors ist derart ausgebildet, dass die Positionsgeberelemente in einer Reihe nebeneinander angeordnet sind. Mittels dieser Ausführungsform ist es möglich, die Bewegung des bewegenden Elements auf einem geradlinigen Messpfad zu erfassen. Dies kann beispielsweise zum Messen der Position eines verschiebbaren Sitzes in einem Automobil verwendet werden.

Eine vorteilhafte Ausführungsform des erfindungsgemäßen Sensors ist derart ausgebildet, dass die Positionsgeberelemente in einer kreisform angeordnet sind. Mittels dieser Ausführungsform ist es möglich, eine Drehbewegung des bewegenden Elements zu erfassen.

Eine vorteilhafte Ausführungsform des erfindungsgemäßen Sensors ist derart ausgebildet, dass die Positionsgeberelemente gleichmäßig zueinander beabstandet angeordnet sind. Der Vorteil dieser Ausführungsform liegt darin, dass anhand des gleichmäßigen Abstandes zwischen den Positionsgeberelementen ein Rückschluss auf den zurückgelegten Weg bzw. Position des bewegenden Elements anhand eines Positionsgeberelements gezogen werden kann.

Eine vorteilhafte Ausführungsform des erfindungsgemäßen Sensors ist derart ausgebildet, dass das Positionsgeberelement einen elektromagnetischen Schwingkreis umfasst. Mittels dieser Ausführungsform kann eine besonders gute Signalgüte der Spannung der Empfangsspulen erzielt werden.

Eine vorteilhafte Ausführungsform des erfindungsgemäßen Sensors ist derart ausgebildet, dass der Schwingkreis mindestens ein kapazitives und ein induktives Element aufweist.

Eine vorteilhafte Ausführungsform des erfindungsgemäßen Sensors ist derart ausgebildet, dass das kapazitive Element ein Kondensator und / oder das induktive Element ein Stromleiter ist.

Eine vorteilhafte Ausführungsform des erfindungsgemäßen Sensors ist derart ausgebildet, dass jedes Positionsgeberelement, insbesondere Schwingkreis, eine eigene Eigenfrequenz aufweist. Die individuelle Eigenfrequenz jedes einzelnen Positionsgeberelements ermöglicht eine eindeutige Identifikation des Positionsgeberelements, so dass deren Position im Verhältnis zu den Empfangsspulen absolut erfasst werden kann. Im einfachsten Fall weisen alle Schwingkreise dieselbe Eigenfrequenz auf.

Eine vorteilhafte Ausführungsform des erfindungsgemäßen Sensors ist derart ausgebildet, dass die Eigenfrequenz des Positionsgeberelements in Abhängigkeit der Erregerfrequenz festgelegt wird. Mittels dieser Ausführungsform ist eine besonders genaue Erfassung der Position eines Positionsgeberelements möglich, wenn die Eigenfrequenz mit der Frequenz der Wechselspannung bzw. der Erregerfrequenz übereinstimmt.

Eine vorteilhafte Ausführungsform des erfindungsgemäßen Sensors ist derart ausgebildet, dass die Wechselspannung eine Spannungsfrequenz aufweist, wobei die Wechselspannung in unterschiedliche Frequenzen einstellbar ist oder variierbar ist.

Eine vorteilhafte Ausführungsform des erfindungsgemäßen Sensors ist derart ausgebildet, dass die Spannungsfrequenz mittels Addition mehrerer Spannungsfrequenzen oder Spannungsquellen eingestellt wird. Diese Ausführungsform ermöglicht eine besonders einfache und kostengünstige Umsetzung der Wechselspannungserzeugung.

Eine vorteilhafte Ausführungsform des erfindungsgemäßen Sensors ist derart ausgebildet, dass die Wechselspannung abwechselnd in unterschiedliche Frequenzen einstellbar ist.

Eine vorteilhafte Ausführungsform des erfindungsgemäßen Sensors ist derart ausgebildet, dass die Spannungsfrequenz in Abhängigkeit der Eigenfrequenz der Positionsgeberelemente eingestellt wird oder die Eigenfrequenz in Abhängigkeit der unterschiedlich einstellbaren Spannungsfrequenzen festgelegt wird.

Die Erfindung wird nachfolgend anhand von Ausführungsbeispielen und Figuren näher beschrieben. Es zeigen:
- Fig. 1: eine schematische Schaltungsanordnung mit einem ersten Ausführungsbeispiel des erfindungsgemäßen Sensors,
- Fig. 2a: eine schematische Darstellung einer Erregerspule und zwei Empfangsspulen gemäß einem ersten Ausführungsbeispiel,
- Fig. 2b: eine schematische Darstellung einer Positionsgebereinheit gemäß einem ersten Ausführungsbeispiel,
- Fig. 3a: eine schematische Darstellung einer Erregerspule und zwei Empfangsspulen gemäß einem zweiten Ausführungsbeispiel, und
- Fig. 3b: eine schematische Darstellung einer Positionsgebereinheit gemäß einem zweiten Ausführungsbeispiel.

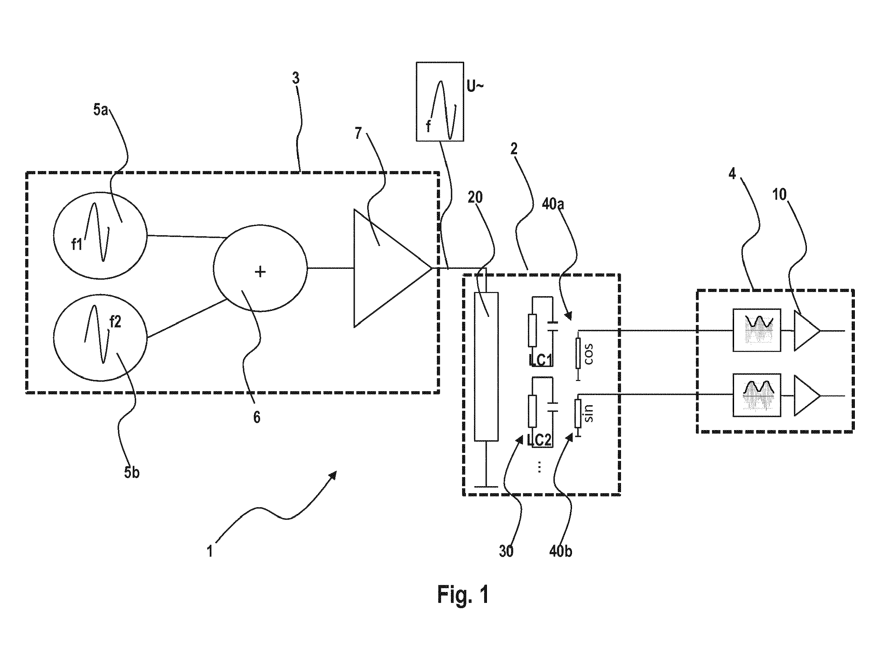

Figur 1 zeigt eine Schaltungsanordnung 1 mit einem ersten Ausführungsbeispiel des erfindungsgemäßen Sensors 2 in einer schematischen Darstellung. Die Schaltungsanordnung weist eine Spannungsquelle 3, den Sensor 2 sowie eine Auswerteeinheit 4 auf. Die Anordnung kann beispielsweise in einem elektrischen Motor, z. B. Gleichstrommotor, eingebaut sein.

Die Spannungsquelle 3 ist mit der Erregerspule 20 elektrisch verbunden und versorgt diese mit einer Wechselspannung U~ zum erzeugen eines zur Wechselspannung U~ korrespondierenden Erregerfeldes. Die Wechselspannung U~ weist eine Spannungsfrequenz auf f, die variabel einstellbar ist und in unterschiedliche Spannungsfrequenzen bzw. Frequenzen einstellbar ist. Die Wechselspannung kann beispielsweise abwechselnd in unterschiedliche Frequenzen eingestellt werden. Dies kann derart erfolgen, dass die Spannungsfrequenz mittels Addition mehrerer Spannungsfrequenzen f1, f2 eingestellt wird. Hierzu weist die Spannungsquelle 3 zunächst zwei Wechselspannungserzeuger 5a und 5b auf, die jeweils eine Wechselspannung in unterschiedlichen Frequenzen f1, f2 erzeugen. Diese Ausgestaltung hat den Vorteil, dass die Wechselspannung U~ leicht durch Variierung der Summenteile veränderbar ist. Die Ausgangssignale der Spannungserzeuger 5a und 5b werden einem Addierer 6 zugeführt. Die Summe der Ausgangssignale werden einer Treibereinheit 7 zugeführt, der aus diesem Signal die Wechselspannung U~ erzeugt und diese der Erregerspule 20 zuführt. Es ist jedoch auch denkbar andere bereits bekannte Lösungen zur Erzeugung einer Wechselspannung in unterschiedlichen Frequenzen zu verwenden.

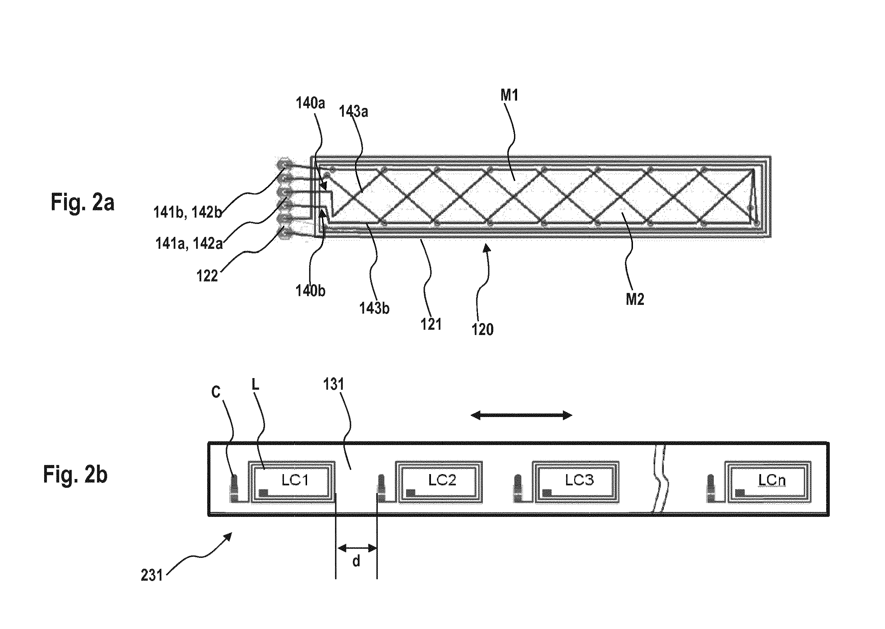

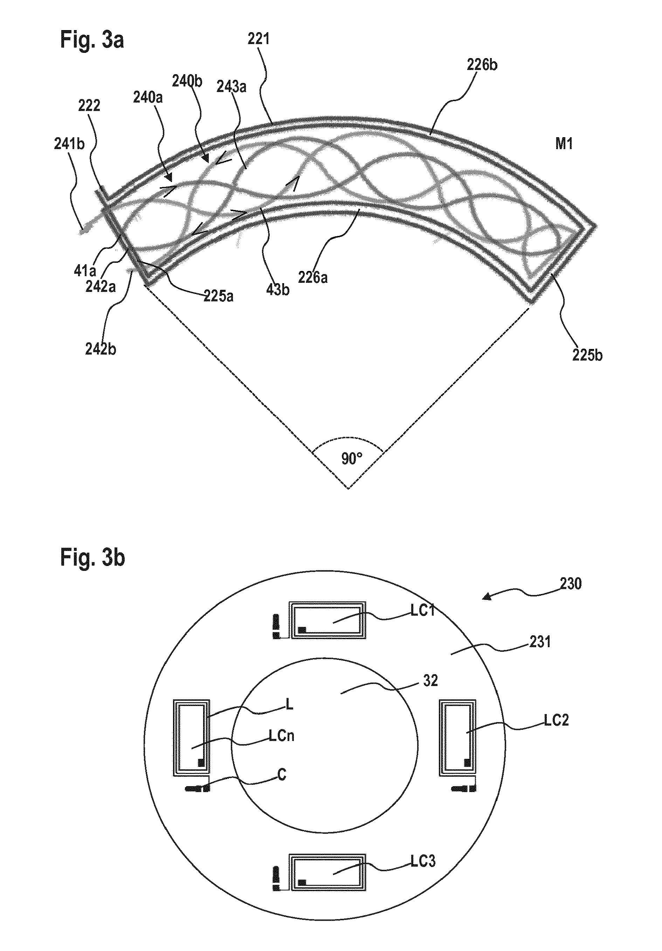

Der Sensor 2 umfasst im Wesentlichen die Erregerspule 20, eine Winkelgebereinheit 30 und zwei Empfangsspulen 40a, 40b. In Figur 1 ist die Anordnung der Erregerspule 20, der Winkelgebereinheit 30 und der Empfangsspulen 40a, 40b jeweils nur schematisch dargestellt. Bevorzugte Ausführungsbeispiele der Erregerspule, Empfangsspule und der Positionsgebereinheit sind in den nachfolgenden Ausführungsbeispielen in der Figur 2a, 2b und 3a, 3b gezeigt.

In Figur 1 ist die Anordnung der Erregerspule 20, der Winkelgebereinheit 30 und der Empfangsspulen 40a, 40b jeweils nur schematisch dargestellt. In einer bevorzugten Anordnung sind die Empfangsspulen und die Erregerspule auf einem Trägerkörper angeordnet und die Winkelgebereinheit parallel benachbart zu den Spulen bzw. deren Trägerkörper angeordnet. Dies gilt auch für die nachfolgenden Ausführungsbeispiele entsprechend. Zur besseren Darstellung ist die Positionsgebereinheit getrennt von der Erregerspule und den Empfangsspulen in den Figuren abgebildet.

Nachfolgend werden die einzelnen Ausführungsbeispiele näher beschrieben.

In Figur 2a ist eine Einheit aus einer Erregerspule 120 und zwei Empfangsspulen 140a, 140b gezeigt. Die Erregerspule 120 ist, vorzugsweise als eine auf einer Leiterplatine aufgedruckte Leiterbahn oder elektrischen Leiter ausgebildet und um die Empfangsspulen 140a, 140b herum angeordnet, so dass das durch die Wechselspannung U~ erzeugte Erregerfeld eine Spannung Uout1, Uout2 in den Empfangsspulen 140a, 140b induziert. Die Wicklung 121 der Erregerspule ist über zwei Bahnen gewickelt, wobei die Anschlusspunkte 122 außen angeordnet sind. Die Erregerspule 120 ist über die Anschlusspunkte 122 mit der Spannungsquelle 3 verbunden. Die Wicklung 121 der Erregerspule ist länglich und viereckig geformt. Die Leiterplatine oder der Trägerkörper weist vorzugsweise eine dazu entsprechende Form und Größe auf.

Die Wicklungen 143a, 143b der Empfangsspulen 140a, 140b weisen eine im wesentlichen trapezförmige Form auf. Denkbar ist auch die Verwendung anderer periodischer Formen, wie in den anderen Ausführungsbeispielen gezeigt. Die Wicklungen 143a, 143b haben einen Anfangspunkt 141a, 141b, die an einem Ende des Kreissegments gesetzt sind. Die Wicklungen 143a, 143b laufen von dort entsprechend ihrer periodischer Form entlang des Kreissegments bis zum anderen Ende des Kreissegments. Von dem anderen Ende laufen die Wicklungen 143a, 143b wie eine reflektierte Welle zum ersten Ende des Kreissegments zurück.

Vorzugsweise ist die Periodenlänge der Wicklungen derart ausgeführt, dass ein ganzzahliges Vielfaches der Periode innerhalb des Kreissegments hineinpasst. Andernfalls wird die Wicklung 143a, 143b im Wesentlichen parallel zur Begrenzung der Erregerspule 120 geführt und von dort aus die Wicklung 43b weiter fortgeführt. Das Ende der Wicklung bildet jeweils ein Endpunkt 142a, 142b. Über die Anfangs- und Endpunkte 141a, 142a, 141b, 142b wird die Ausgasspannung Uout1~, Uout2~ von den Empfangsspulen abgegriffen.

In Figur 2b ist ein Ausführungsbeispiel der Positionsgebereinheit 130 gezeigt, die vorzugsweise mit dem ersten Ausführungsbeispiel der Erregerspule 120 und den Empfangsspulen 140a, 140b verwendet wird.

Die Positionsgebereinheit 130 weist einen Trägerkörper 131 und mehrere Schwingkreise LC1-LCn auf. Der Index n deutet darauf hin, dass es sich um eine beliebige Anzahl von Schwingkreisen handeln kann. Der Trägerkörper 131 ist in diesem Beispiel eine Leiterplatine. Auf dem Trägerkörper 131 sind die Positionsgeberelemente in Form von Schwingkreisen LC1-LCn angeordnet. Die Schwingkreise LC1-LCn sind mittels aufgedruckten Leiterbahnen oder Leiterelemente ausgebildet. Der Schwingkreis weist einen Kondensator K und einen Stromleitern L als intuitives Element auf. Der Trägerkörper ist im Wesentlichen länglich geformt, wobei die Schwingkreise LC entlang der Längsachse des Trägerkörpers 131 in gleich großen Abständen d zueinander angeordnet sind. Die Länge des Trägerkörpers hängt von dem Anwendungsfall ab, was in Figur 2b durch die zwei geschwungenen Linien neben dem Schwingkreis LCn dargestellt ist. Vorzugsweise Sind die Schwingkreise LC1-LCn von einem Ende bis zum anderen Ende des Trägerkörpers 131 gleichmäßig verteilt angeordnet. Die Positionsgebereinheit ist auf einem bewegenden Element angebracht und bewegt sich diesem Element mit. Bei diesem Ausführungsbeispiel handelt es sich um eine lineare, vorzugsweise geradlinige, Bewegung. In Figur 2b wird das durch den beidseitigen Pfeil angedeutet.

Aufgrund der induktiven Kopplung mit der Erregerspule 20 erzeugen die zwei Empfangsspulen 140a, 140b (es können auch mehr sein) jeweils eine Ausgangsspannung Uout1, Uout2 (vgl. Fig. 1), die eine sinusförmige bzw. kosinusförmige Form aufweisen können. Die Spannungen Uout1, Uout2 ändern sich, sobald die Positionsgebereinheit 30 ein Messfeld M1, M2 der Empfangsspulen 40a, 40b überdeckt und seine Position relativ zum Messfeld ändert, wie in Figur 5 schematisch dargestellt. Anhand dieser Spannungsänderung kann die Position der Positionsgebereinheit erfasst werden.

Besonders vorteilhaft ist es, jeden Schwingkreis derart auszulegen, dass sich die Eigenfrequenz der Schwingkreise LC1-LCn voneinander unterscheiden. Auf diese Weise ist mittels der Eigenfrequenzen jeder Schwingkreis LC1-LCn eindeutig identifizierbar, so dass es möglich ist, die Position eines Schwingkreises relativ zu den Messfeldern eindeutig festzustellen. Vorteilhafter Weise wird hierzu die Frequenz der Wechselspannung U~ abwechselnd, bspw. nacheinander in der Reihenfolge der Eigenfrequenzen der Schwingkreise LC1-LCn eingestellt. Alternativ kann die Eigenfrequenz in Abhängigkeit der unterschiedlich einstellbaren Wechselspannungsfrequenzen f festgelegt werden.

Die Auswerteeinheit 4 ist mit den Empfangsspulen 40a, 40b verbunden und wertet die Ausgangsspannungen Uout1, Uout2 der Empfangsspulen 40a, 40b aus. Die Ausgangsspannungen der Empfangsspulen 40a, 40b werden mittels Demodulatoren 10 verarbeitet. Als Ausgangssignal wird in der Regel ein sinus- oder kosinusförmiger Spannungsverlauf ausgegeben. Die Amplitude und Frequenz der Ausgangsspannungen gibt Ausschluss über die zumindest relative Winkelposition der Winkelgebereinheit 30 bzw. des rotierenden Elements.

Nachfolgend werden die in den Figuren 3a und 3b gezeigten Ausführungsbeispiele näher beschrieben, die sich zum Messen eines Drehwinkels eines rotierenden Elements eignen.

Figur 3 zeigt ein zweites Ausführungsbeispiel der Erregerspule 220 und der Empfangsspulen 240a, 240b. Die Erregerspule und die Empfangsspulen sind kreissegmentförmig ausgebildet und erstrecken sich über 90 ° des Kreissegments. Es ist aber auch denkbar die Größe des Kreissegments anders zu gestalten, beispielsweise ein Vielfaches von 45°.

Die Erregerspule 220 weist eine Wicklung 221 auf, die über zwei Bahnen gewickelt ist. Zwei kreisbogenförmige Segmente 226a, 226b und zwei im Wesentlichen radial verlaufende Begrenzungen 225a und 225b bilden den Verlauf der Wicklung 221 der Erregerspule 220 ab. Innerhalb des von der Erregerspule 220 eingeschlossen Bereichs befinden sich die Empfangsspulen 240a, 240b. Die Erregerspule ist über die Anschlusspunkte 222 mit der Spannungsquelle 3 verbunden.

Die Empfangsspulen 240a, 240b weisen eine Wicklung 243a, 243b mit einen Sinus- bzw. Kosinus-förmigen Verlauf auf. Die Wicklungen 243a, 243b haben einen Anfangspunkt 241a, 241b, die an einem Ende des Kreissegments angeordnet sind. Die Wicklungen 243a, 243b laufen von dort entsprechend ihrer periodischer Form entlang des Kreissegments bis zum anderen Ende des Kreissegments. Von dem anderen Ende laufen die Wicklungen 243a, 243b wie eine reflektierte Welle zum ersten Ende des Kreissegments zurück. Entsprechend zum ersten Ausführungsbeispiel aus Figur 2a bildet jeweils ein Endpunkt 242a, 242b das Ende der Wicklung. Über die Anfangs- und Endpunkte 241a, 242a, 241b, 242b wird die Ausgasspannung Uout1~, Uout2~ von den Empfangsspulen abgegriffen. Eine dazu besonders gut korrespondierende Positionsgebereinheit 230 ist in Figur 3b gezeigt. In Figur 3 ist ein Ausführungsbeispiel der Winkelgebereinheit 30 gezeigt. Die Winkelgebereinheit 30 ist mit einem rotierenden Element verbunden und verändert ihre relative Position zu den Empfangsspulen 40a, 40b durch die Bewegung des rotierenden Elements.

Die Winkelgebereinheit 230 weist einen Trägerkörper 31 auf, der beispielsweise als eine Leiterplatine ausgeführt sein kann. Der Trägerkörper 31 ist ringförmig ausgebildet. In der Mitte weist der Trägerkörper 31 eine Ausnehmung 32 auf, durch die das rotierende Element durchführbar ist.

Auf einer Fläche des Trägerkörpers 31 sind mehrere Schwingkreise LC innerhalb des ringförmigen Bereichs angeordnet. Bei den Schwingkreisen handelt es sich um elektromagnetische Schwingkreise LC mit einem Kondensator C und einem Stromleiter L als induktives Element. Der Schwingkreis LC kann mittels auf einer Leiterplatine aufgedruckten Leiterbahnen hergestellt werden. Es handelt sich vorzugsweise um einen passiven Schwingkreis LC, der eine eigene Eigenfrequenz aufweist. Die Eigenfrequenz der Schwingkreise kann sich voneinander unterscheiden. Vorzugsweise beträgt die Eigenfrequenz des Schwingkreis LC der Frequenz des Erregerfeldes bzw. der Wechselspannungsfrequenz f. Vorzugsweise sind die Schwingkreise LC um den Mittelpunkt des Trägerkörper herum gleichmäßig beabstandet angeordnet. In Figur 4 sind vier Schwingkreise LC jeweils um 90° versetzt zueinander angeordnet. Im Allgemeinen sollte die Anzahl m der Schwingkreise m betragen, wobei
m = 360° / alpha
ist, wobei alpha der Winkel ist, über den sich das Kreissegment der Erregerspule 220 bzw. Empfangsspulen 240a, 240b erstreckt.

Die Erfindung ist nicht auf die vorgenannten Ausführungsbeispiele beschränkt. Die vorgenannten Ausführungsbeispiele der Erregerspule, Empfangsspulen sind mit den Ausführungsbeispielen der Winkelgebereinheit beliebig kombinierbar.

Es ist ferner möglich, den Drehwinkelsensor mit einer einfachen Schaltungsanordnung zu verwenden, die mit einer einzigen Wechselspannungsfrequenz betrieben wird. Des Weiteren ist die Auswerteeinheit 4 nicht auf das oben genannte Ausführungsbeispiel beschränkt, sondern kann durch weitere Auswerteelektronik ergänzt werden. Ferner können die Ausführungsbeispiele in einer einfachen Ausführung auch mit einer Wechselspannung in einer Frequenz realisiert werden.

## Patentansprüche

1. Sensor (2) zum Erfassen der Position eines bewegenden Elements, aufweisend:
- eine Erregerspule (20, 120, 220), welche mit einer Wechselspannung (U~) versorgt wird, um ein zur Wechselspannung (U~) korrespondierendes Erregerfeld zu erzeugen,
- mindestens eine, vorzugsweise zwei, Empfangsspule (40a, 40b, 140a, 140b, 240a, 240b), die mit der Erregerspule (20, 120, 220) derart gekoppelt sind, so dass das Erregerfeld in der Empfangsspule (40a, 40b, 140a, 140b, 240a, 240b) jeweils eine Spannung induziert, und
- eine Positionsgebereinheit, das mit dem bewegenden Element verbunden ist und mittels dessen die Spannung der Empfangsspule (40a, 40b, 140a, 140b, 240a, 240b) beeinflussbar ist,
**dadurch gekennzeichnet, dass** die Positionsgebereinheit mehrere entlang Positionsgeberelemente (LC1-LCn) aufweist, welche den Messpfad definieren.

2. Sensor (2) nach Anspruch 1, **dadurch gekennzeichnet, dass** die Positionsgeberelemente (LC1-LCn) in einer Reihe nebeneinander angeordnet sind.

3. Sensor (2) nach Anspruch 1, **dadurch gekennzeichnet, dass** die Positionsgeberelemente (LC1-LCn) in einer kreisform angeordnet sind.

4. Sensor (2) nach einem der vorstehenden Ansprüche, **dadurch gekennzeichnet, dass** die Positionsgeberelemente (LC1-LCn) gleichmäßig zueinander beabstandet angeordnet sind.

5. Sensor (2) nach einem der vorstehenden Ansprüche, **dadurch gekennzeichnet, dass** das Positionsgeberelement (LC1-LCn) einen elektromagnetischen Schwingkreis umfasst.

6. Sensor (2) nach Anspruch 5, **dadurch gekennzeichnet, dass** der Schwingkreis mindestens ein kapazitives (C) und ein induktives Element (L) aufweist.

7. Sensor (2) nach Anspruch 6, **dadurch gekennzeichnet, dass** das kapazitive Element ein Kondensator und / oder das induktive Element ein Stromleiter ist.

8. Sensor (2) nach einem der vorstehenden Ansprüche, **dadurch gekennzeichnet, dass** jedes Positionsgeberelement (LC1-LCn) eine eigene Eigenfrequenz aufweist.

9. Sensor (2) nach einem der vorstehenden Ansprüche, **dadurch gekennzeichnet, dass** die Eigenfrequenz des Positionsgeberelements in Abhängigkeit der Erregerfrequenz festgelegt wird.

10. Sensor (2) nach einem der vorstehenden Ansprüche, **dadurch gekennzeichnet, dass** die Wechselspannung (U~) eine Spannungsfrequenz (f) aufweist, wobei die Wechselspannung in unterschiedliche Frequenzen einstellbar ist.

11. Sensor (2) nach einem Anspruch 10, **dadurch gekennzeichnet, dass** die Spannungsfrequenz mittels Addition mehrerer Spannungsfrequenzen (f1, f2) einstellbar ist.

12. Sensor (2) nach Anspruch 10 oder 11, **dadurch gekennzeichnet, dass** die Wechselspannung (U~) abwechselnd in unterschiedliche Frequenzen (f) einstellbar ist.

13. Sensor (2) nach einem der vorstehenden Ansprüche 10 bis 12, **dadurch gekennzeichnet, dass** die Spannungsfrequenz (f) in Abhängigkeit der Eigenfrequenz der Positionsgeberelemente (LC1-LCn) eingestellt wird oder die Eigenfrequenz in Abhängigkeit der unterschiedlich einstellbaren Spannungsfrequenzen (f) festgelegt wird.
